# EUROPÄISCHE PATENTSCHRIFT

(11) **EP 1 806 837 B1**
(45) Veröffentlichungstag und Bekanntmachung des Hinweises auf die Patenterteilung: **08.10.2008**
(21) Anmeldenummer: 06000383.7
(22) Anmeldetag: 10.01.2006
(51) Int. Cl.: H02P 29/04, H02P 3/14, G05B 19/4063

(54) **Verfahren zum Testen einer Bremsfunktion eines Roboterantriebes**
Method for testing the braking function of a robot drive
Méthode pour tester la fonction de freinage d'un entraînement du robot

(43) Veröffentlichungstag der Anmeldung: 11.07.2007
(73) Patentinhaber: ABB Technology AG, 8050 Zurich (CH)
(72) Erfinder: Kock, Sönke, Dr.-Ing., 64319 Pfungstadt (DE); Müller, Christian, Dr.-Ing., 68526 Ladenburg (DE)
(74) Vertreter: Miller, Toivo

(56) Entgegenhaltungen:
- EP-A- 0 924 583
- AT-B- 400 028

## Beschreibung

Die Erfindung betrifft ein Verfahren zum Testen eines Roboterantriebes.

Es ist allgemein bekannt, dass Elektromotoren für bestimmte Anwendungen Bremsen aufweisen, die aufgrund bestimmter Sicherheitsanforderungen regelmäßig zu überprüfen sind. Ein allgemein bekanntes Verfahren zum Überprüfen einer solchen Bremse basiert darauf, dass ein vom Motor aufgebrachtes Testdrehmoment die betätigte Bremse im Stillstand belastet. Bei dieser Methode wird akzeptiert, dass die Bremse nicht unter Betriebsbedingungen getestet werden kann, d.h. der Abbremsfall aus einer Geschwindigkeit in den Ruhestand.

Das Dokument EP 0924583 schlägt ein Verfahren vor, wonach eine bestimmte Spannung an den festgebremsten Motor gelegt wird und aus dem gemessenen Anlaufstrom die Funktion der Bremse beurteilt wird.

Eine weitere allgemein bekannte Weise einen Motor zu testen besteht darin, während des Betriebs kurzzeitig die Bremse zu betätigen, sodass der Motor nicht zum Stillstand kommt, sondern lediglich etwas an Geschwindigkeit verliert. Während dieses Vorgangs wird das Bremsmoment gemessen, sodass der Verlauf des Bremsmoments während des Bremsvorgangs Aufschluss darüber gibt, ob die Bremse noch in zulässigen Parametern arbeitet. Bei der Überprüfung der Bremse nach dieser Art wird der Motor jedoch nicht vollständig gebremst, sodass er mit einer bestimmten Geschwindigkeit weiter arbeitet. Mit dieser Art Test kann nicht festgestellt werden, ob die Bremse den Motor bis zum Stillstand abbremsen kann.

Ausgehend von diesem Stand der Technik ist es Aufgabe der Erfindung, ein Verfahren zum Testen einer Bremsfunktion eines Roboterantriebs anzugeben, das möglichst einfach ist und zudem die vorstehend genannten Nachteile vermeidet.

Diese Aufgabe wird gelöst durch ein Verfahren zum Testen einer Bremsfunktion eines Roboterantriebs mit den im Anspruch 1 genannten Merkmalen.

Demnach weist das erfindungsgemäße Verfahren zum Testen einer Bremsfunktion eines Roboterantriebs folgende Merkmale auf:
- der Roboterantrieb wird positionsgeregelt betrieben,
- eine Bremse wird getätigt während der Roboterantrieb läuft,
- nach einer vorgegebenen Zeitspanne nach dem Betätigen der Bremse wird die Geschwindigkeit des Roboterantriebs gemessen, und
- die gemessene Geschwindigkeit wird mit einem vorgegebenen Referenzwert verglichen.

Das erfindungsgemäße Verfahren zum Testen einer Bremsfunktion des Roboterantriebs wird also während des Betriebs des Roboterantriebs durchgeführt. Zu einem bestimmten Zeitpunkt nach dem Betätigen der Bremse wird die Geschwindigkeit des Roboterantriebs gemessen, und derart festgestellt, ob die Geschwindigkeit des Roboterantriebs aufgrund der Bremswirkung abgenommen hat. In diesem Fall ist der Referenzwert der Geschwindigkeitswert vor dem Betätigen der Bremse. Auf diese Weise ist ein besonders einfacher Test realisiert, ob die Bremse eine Bremswirkung hat oder nicht.

In einer vorteilhafter Weiterbildung des Anmeldungsgegenstandes ist es vorgesehen, dass eine Position des Roboterantriebs festgestellt wird und dass die festgestellte Position mit einem vorgegebenen Referenzwert verglichen wird.

Auf diese Weise ist es möglich, eine zusätzliche Aussage über die Bremse zu erhalten, nämlich ob die Bremse den Roboterantrieb zum vollständigen Stillstand bringt.

Diese Aussage ist zwar auch mit dem eingangsgenannte Verfahren, nämlich dann möglich, wenn die gemessene Geschwindigkeit den Wert Null annimmt, jedoch ist die zusätzliche Zusage der Position des Roboterantriebes ein zweiter Messwert, der die Sicherheit der Aussage erhöht.

Es hat sich als zweckmäßig herausgestellt, wenn die Bremse bei einer Geschwindigkeit betätigt wird, die vergleichsweise klein ist, insbesondere kleiner als 1/10 der maximalen Geschwindigkeit des Roboterantriebes.

Bei solchen Geschwindigkeiten, zum Beispiel 30mm/sec bis 70mm/sec sind die Bremskräfte und Bremsmomente vergleichsweise klein, sodass die Materialbelastung der Bremse sowie des Roboterantriebes vorteilhaft gering sind.

Das erfindungsgemäße Verfahren ist auch bei mehrachsigen Robotern mit zwei oder mehr Roboterantriebe auf diese Weise gleichzeitig oder nacheinander angewendbar. Dementsprechend sind die Bewegungsabläufe der Roboterantriebe zu wählen mit dem Ergebnis, dass ein derartiges Verfahren zum Testen von Bremsfunktionen mehrerer Roboterantriebe besonders zeitsparend durchführbar ist.

Zudem ist es nunmehr möglich, solche Tests der Bremsfunktion in bestimmten Zeitabständen zu wiederholen, beispielsweise bei jeden Schichtanfang oder Arbeitswoche usw. Aus den sich möglicherweise veränderten Ergebnissen der Tests zu den verschiedenen Zeitpunkten ist dann eine Bewertung der Entwicklung oder des Trends der Bremsfunktion des entsprechenden Roboterantriebes möglich. So kann beispielsweise ein sich ändernder Funktionswert der Bremse in die Zukunft extrapoliert werden und so zu einer Aussage führen, wann die Bremse einen unzulässigen Verschleißzustand erreicht oder die Möglichkeit eines Versagens der Bremse besteht.

Weitere vorteilhafte Ausgestattungen des Erfindungsgegenstandes sind den weiteren abhängigen Ansprüchen zu entnehmen.

Anhand des in den Zeichnungen dargestellten Ausführungsbeispiels sollen die Erfindung, ihre Vorteile sowie weitere Verbesserungen der Erfindung erläuternd beschrieben werden.

Es zeigen:
- Figur 1: eine Skizze über das mechanische Zusammenwirken verschiedener Roboterkomponenten
- Figur 2: eine Skizze eines Verfahrensablaufes zum Testen eines Roboterantriebes.

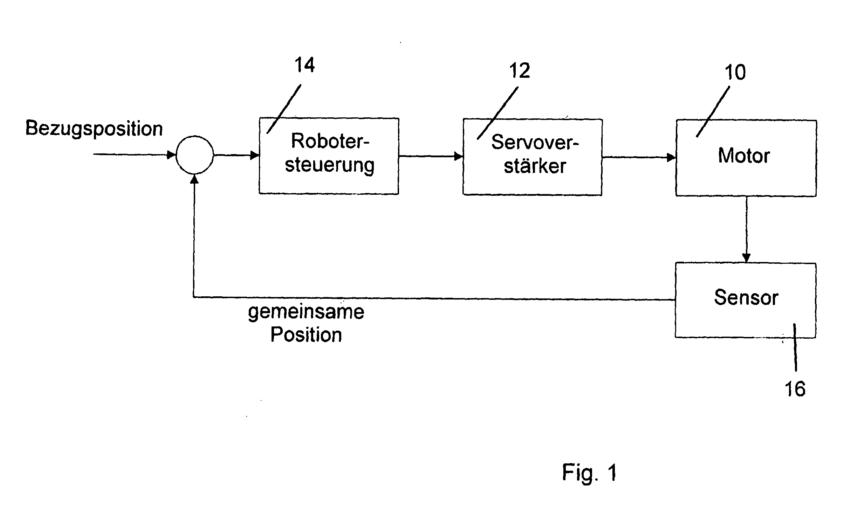

Figur 1 zeigt in eine Skizze das Zusammenwirken verschiedener Anlageteile, die zum Realisierung des später näher erläuterten Beispiels einer Ausgestaltung des erfindungsgemäßen Verfahrens benötigt werden. Im gezeigten Beispiel soll ein Roboterantrieb 10, der üblicherweise als Servomotor ausgeführt ist, mit einer nicht näher dargestellten Bremse versehen sein, deren Funktion zu testen ist. Der Roboterantrieb 10 ist mit einen Servoverstärker 12 verbunden, der wiederum durch eine Robotersteuerung 14 angesteuert wird. Die Robotersteuerung 14 wird dabei positionsgeregelt betrieben. Bei dieser Regelungsart wird dem Roboter eine Raumposition vorgegeben, auf den sich ein bestimmter Punkt des Roboters der sich üblicherweise am äußeren Ende des Roboterarmes befindet, hinbewegen soll. Die Optimierung des entsprechenden Bewegungsablaufes zu dieser Raumposition bleibt dann der Robotersteuerung überlassen. Bei entsprechender Wahl des Roboterweges wird also beispielsweise ein bestimmter Antrieb eines mehrachsigen Roboters und durch die Robotersteuerung ein bestimmten Winkelbetrag bewegt. Alternativ können auch für die zu testenden Antriebe Einzelwinkel vorgegeben werden die nicht zu einer koordinierten Bewegung auf einer Bahn führen.

Am Roboterantrieb 10 ist ein Sensor 16 angebracht, der im beschriebenen Beispiels als Winkelsensor ausgestaltet ist und derart die tatsächliche Position des Roboterantriebs 10 misst und beispielsweise als absolute Winkelposition an die Robotersteuerung 14 meldet. Diese gemessene Position wird im vorliegenden Beispiel in Form einer Subtraktion mit einem Referenzwert, nämlich einer vorgegebenen Position auf die sich der Roboterantrieb 10 bewegen soll, verglichen.
Auf diese Weise wird der Roboterantrieb 10 so lange bewegt, bis die vorgegebene Position erreicht wird, nämlich indem der Differenzwert den Wert Null annimmt und dies an die Robotersteuerung 14 meldet, sodass der Roboterantrieb 10 auf der Position gestoppt wird.

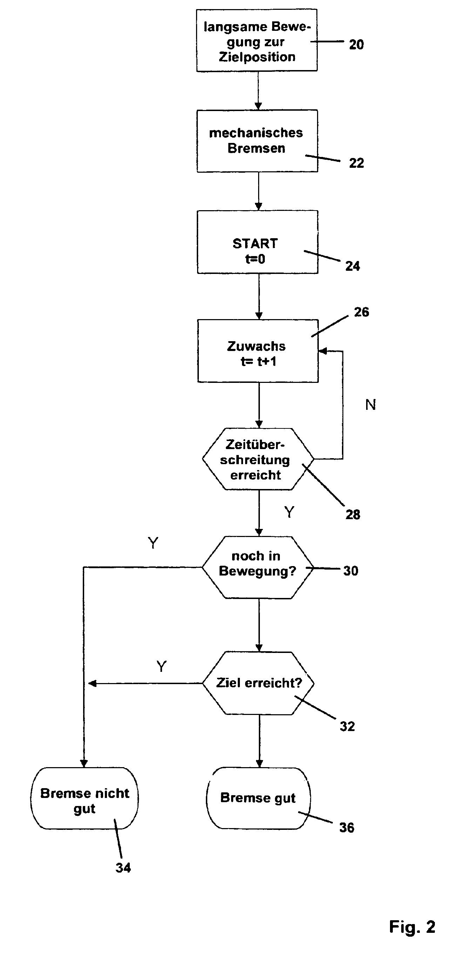

Figur 2 zeigt das Beispiel eines erfindungsgemäßen Verfahrens zum Testen einer Bremsfunktion eines Roboterantriebes in Form eines Ablaufdiagrammes einer vorteilhaften Ausgestaltung. Dabei geht das Ablaufschema beim Ablaufstart davon aus, dass der Roboterantrieb 10 im Stillstand ist und gemäß der ersten Verfahrensanweisung 20 von der Robotersteuerung 14 veranlasst wird, einen zuvor definierten Zielpunkt mit einer kleiner und konstanten Geschwindigkeit sich auf einen zuvor definierten Zielpunkt zu zubewegen. Dabei sind als kleine Geschwindigkeiten solche zu bezeichnen, die kleiner als 1/10 der maximalen Geschwindigkeit eines solchen Antriebs sind. In der Praxis hat sich herausgestellt das insbesondere Geschwindigkeiten von 10 bis 70 mm/sec, gemessen am Ende des Roboterarmes für übliche Industrieroboter, die beispielsweise eine maximale Geschwindigkeit von ca. 3 m/sec haben, gute Ergebnisse liefern.

Während der Roboterantrieb 10 und die durch die Robotersteuerung 14 veranlasste Bewegung ausführt, wird gemäß einer zweiten Verfahrensanweisung 22 von der Robotersteuerung die Bremse, in diesen Fall eine mechanische Bremse, aktiviert und gleichzeitig gemäß einem dritten Verfahrensschritts 24 ein Zeitmesser gestartet. Das erwartete Ergebnis ist, dass die Bremse den Motor zum Stillstand bringt. Schließlich ist es auslegungsgemäß vorgesehen, dass die Bremse eine stärkere Bremskraft aufbringt, als der Roboterantrieb 10 in der Lage ist, als Antriebsmoment aufzubringen. Auf diese Weise ist gewährleistet, dass der Roboter in jeder Situation, also auch beispielsweise bei Fehlfunktion der Robotersteuerung 14 zum Stillstand kommt oder zum Stillstand gebracht wird. Das ist eine häufig geforderte Sicherheitsfunktion und -forderung bei Robotern. Zu diesem Zweck ist es auch zweckmäßig für den Zeitraum des Testens der Bremsfunktion die entsprechenden Sicherheitsverriegelung in der Robotersteuerung auszuschalten. Durch das bewusst einlegen der Bremse wird dem Roboter nämlich simuliert, dass die Steuerungsbefehle nicht korrekt ausgeführt werden, da der Positionssensor die absolute Position des Roboterantriebs 10 ständig an die Steuerungsvorrichtung 14 meldet, während diese mit eingelegter Bremse lediglich einen anderen Positionswert erreicht als die Steuerungsvorrichtung 14 erwartet.

Gemäß einem vierten Verfahrensschritt 26 läuft der Zeitmesser solange bis er gemäß einem fünften Verfahrensschritt 28 eine bestimmte, zuvor festgelegte Abschaltzeit erreicht hat. Dieses symbolisiert ein in dem vom fünften Verfahrenschritt gezeigter Pfeil, der zurück zum vierten Verfahrenschritt 26 führt. Diese Schritte 26, 28 werden solange ausführt, bis das Zeitziel erreicht ist.

Nach dem die festgelegte Zeitspanne verstrichen ist wird gemäß einem sechsten Verfahrenschritt 30 zunächst festgestellt, ob sich eine Antriebsachse des Antriebsmotors 10 noch bewegt. Dies wird über den Sensor 16 festgestellt, der im Falle des Stillstands der Antriebsachse immer den selben Wert liefert, ansonsten jeweils verschieden Winkelwerte oder -position an die Robotersteuerung 14 meldet. Sollte sich die Achse noch bewegen, bedeutet das, dass die Bremswirkung geringer ist als die Wirkung des Antriebsdrehmoments des Antriebsmotors 10. Dabei ist zu beachten, dass die Robotersteuerung 14 versuchen wird den Antriebsmotor 10 durch entsprechende Ansteuerung auf seinem Sollwert zu halten. Im Fall einer eingelegten Bremse wird die Robotersteuerung 14 also gegebenenfalls mit ihrer maximalen Ansteuerungsleistung den Antriebsmotor 10 ansteuern und diesen versuchen auf seinen Sollwerten zu halten. Auf diese Weise ist feststellbar, ob die Bremse das dann aufgebrachte maximale Antriebsmoment des Antriebsmotors 10 noch fixieren kann und die Achse dementsprechend zum Stillstand kommt oder gekommen ist.

Wurde festgestellt, dass die Achse zum Stillstand gekommen ist, wird anschließend gemäß einem siebten Verfahrensschritt 32 festgestellt, ob die Zielposition zwischenzeitlich, erreicht ist. Diese Abfrage ist eine zusätzlich Sicherheitsabfrage, die unterstellt, dass die vorgegebene Zeitspanne in Prinzip ausreichend ist, dass der Roboter an die vorgegebene Zielposition erreicht haben könnte, wenn die Bremse schadhaft wäre, wird automatisch die Robotersteuerung 14 dem Roboterantrieb 10 anhalten, sodass der Antriebsmotor 10 durch die Robotersteuern 14 und nicht durch die Bremse gestoppt wurde. Die Zeitspanne ist aber groß genug, um sicher zustellen, dass der Antrieb bei funktionierender Bremse den Zielpunkt garantiert nicht erreichen kann. Ist die Zielposition zwischenzeitlich also erreicht, ist das ein Hinweis, dass die Bremse möglicher Weise schadhaft ist und führt zum Ergebnis "Bremse nicht gut" 34. Im anderen Fall, dass die Zielposition nämlich aufgrund der Bremswirkung gerade nicht erreicht wurde, führt zu dem Ergebnis, dass die Bremse als "Bremse gut" 36 befunden wird.

Das vorstehend beispielhaft genannte Verfahren für das Testen einer Bremsfunktion eines einzelnen Roboterantriebes ist prinzipiell unbeschränkt auch gleichzeitig an verschieden Roboterantrieben eines mehrachsigen Roboters anwendbar. So kann beispielsweise ein entsprechend komplexer Bewegungsablauf des Roboterarmes dazu genutzt werden, dass erfindungsgemäße Verfahren an mehreren Antrieben gleichzeitig durchzuführen. Das verkürzt vorteilhaft die Testzeit für einen Roboter insgesamt. Dabei spielt es auch keine wesentliche Rolle, ob das Verfahren parallel, was besonders zeitsparend ist, durchgeführt wird oder jede Achse nacheinander separat getestet wird.

Schließlich hat sich als weiterer Vorteil herausgestellt, dass wenn der Test der Bremsfunktion regelmäßig durchgeführt wird durch Vergleichen der einzelnen Testergebnisse ein Trend feststellbar ist; wie sich die Bremsfunktion entwickelt. Sei es dass Verschleiß einsetzt oder andere technische Probleme eintreten, welche die Bremsfunktion beeinflussen könnten. Solange die Störungen einen bestimmten Zeitraum brauchen, um festgestellt werden zu können, ist ein Vergleich der Testergebnisse der Bremsfunktion für die Bewertung der Bremse insgesamt nutzbar. Es können sogar Vorhersagen getroffen werden, wie sich die Bremswirkung entwickelt sowie eine Aussage darüber getroffen werden, wie ein zukünftiger Bremszustand sein wird. Schließlich ist aufgrund dieser Prognose noch eine Aussage darüber möglich wann ein zweckmäßiger Erwartungszeitpunkt für die Bremse ist. Auf diese Weise können Serviceintervalle der Bremse mit anderen Serviceintervallen von anderen Funktionen am Roboter besonders vorteilhaft koordiniert werden.

### Bezugszeichenliste

- 10: Roboterantrieb
- 12: Servoverstärker
- 14: Robotersteuerung
- 16: Sensor
- 20: Verfahrensanweisung
- 22: Verfahrensanweisung
- 24: Verfahrensschritt
- 26: Verfahrensschritt
- 28: Verfahrensschritt
- 30: Verfahrensschritt
- 32: Verfahrensschritt
- 34: "Bremse nicht gut"
- 36: "Bremse gut"

## Patentansprüche

1. Verfahren zum Testen einer Bremsfunktion eines Antriebes (10) für einen Roboter, welcher Antrieb (10) zumindest zeitweise mit einer mechanischen Motorbremse gekoppelt ist, die den betreffenden Antrieb während der Überprüfung beaufschlagt,
**dadurch gekennzeichnet,**
**dass** der Roboterantrieb (10) positionsgeregelt betrieben wird,
**dass** eine Bremse betätigt wird, während der Roboterantrieb läuft (22),
**dass** nach einer vorgegebenen Zeitspanne (28) nach dem Betätigen der Bremse die Geschwindigkeit des Roboterantriebes gemessen wird (30), und
**dass** die gemessene Geschwindigkeit mit einem vorgegebenen Referenzwert verglichen wird (32).

2. Verfahren nach Anspruch 1, **dadurch gekennzeichnet, dass** eine Position des Roboterantriebes festgestellt wird und dass die festgestellte Position mit einem vorgegebenen Referenzwert vergleichen wird.

3. Verfahren nach Anspruch 2, **dadurch gekennzeichnet, dass** der Roboterantrieb mit einer konstanten Sollgeschwindigkeit betrieben wird.

4. Verfahren nach Anspruch 2 oder 3, **dadurch gekennzeichnet, dass** eine Geschwindigkeit gewählt wird, die kleiner ist als ein Zehntel der maximalen Geschwindigkeit des Roboterantriebes.

5. Verfahren nach einem der vorgenannten Ansprüche, **dadurch gekennzeichnet, dass** als Referenzwert für die Geschwindigkeit der Wert Null festgelegt wird.

6. Verfahren nach einem der vorgenannten Ansprüche, **dadurch gekennzeichnet, dass** als Referenzwert für die festgelegte Position eine zuvor festgelegte Zielposition auf der Bewegungsbahn des Roboters ist.

7. Verfahren nach einem der vorgenannten Ansprüche, **dadurch gekennzeichnet, dass** die Zielposition nach einer geplanten Geschwindigkeitsfunktion gemäß einer Vorgabe eines Bewegungsablaufes in der Robotersteuerung festgelegt wird.

8. Verfahren nach einem der vorgenannten Ansprüche, **dadurch gekennzeichnet, dass** eine Zeitmessung gestartet wird zu dem Zeitpunkt, wenn die Bremse betätigt wird.

9. Verfahren nach einem der vorgenannten Ansprüche, **dadurch gekennzeichnet, dass** eine Überwachungsfunktion und / oder eine Sicherheitsfunktion einer Fehlerkontrollvorrichtung zumindest während des Testvorganges abgeschaltet wird.

10. Verfahren nach einem der vorgenannten Ansprüche, **dadurch gekennzeichnet, dass** ein zulässiges maximales Antriebsmoment des Roboterantriebes zumindest während des Testvorganges auf einen Wert begrenzt wird, der kleiner als der Maximalwert im Normalbetrieb ist.

11. Verfahren zum Testen von Bremsfunktionen eines Roboters mit wenigstens zwei Roboterantrieben mit einem Verfahren nach einem der vorgenannten Ansprüche, **dadurch gekennzeichnet, dass** an jedem Roboterantrieb das Verfahren durchgeführt wird.

12. Verfahren nach Anspruch 11, **dadurch gekennzeichnet, dass** die Roboterantriebe parallel oder /und nacheinander getestet werden.

13. Verfahren zur Bewertung von Bremsfunktionen mit mehreren in festgelegten Zeitabständen durchgeführten Tests von Bremsfunktionen nach einem der vorgenannten Ansprüche, wobei die Testergebnisse bei den unterschiedlichen Zeitpunkten der Tests miteinander in einen zeitlichen Zusammenhang gestellt werden, und wobei mittels einer Trendanalyse, insbesondere der Extrapolation, Vorhersagen über einen aktuellen und/oder zukünftigen Bremszustand getroffen werden.

14. Verfahren nach Anspruch 13, **dadurch gekennzeichnet, dass** aufgrund der Trendanalyse zur Aussage über einen zukünftigen Wartungszeitpunkt, insbesondere durch Extrapolation, getroffen wird.

## Claims

1. A method for testing a brake function of a drive (10) for a robot, which drive (10) is coupled at least temporarily with a mechanical motor brake which actuates the respective drive during the checking, **characterized in that** the robot drive (10) is operated in a position-controlled way, that a brake is actuated while the robot drive is running (22), that the speed of the robot drive is measured (30) after a predetermined interval (28) after the actuation of the brake, and that the measured speed is compared with a predetermined reference value (32).

2. A method according to claim 1, **characterized in that** a position of the robot drive is determined and that the determined position is compared with a predetermined reference value.

3. A method according to claim 2, **characterized in that** the robot drive is operated at a constant nominal speed.

4. A method according to claim 2 or 3, **characterized in that** a speed is chosen which is smaller than one-tenth of the maximum speed of the robot drive.

5. A method according to one of the preceding claims, **characterized in that** the value zero is determined as a reference value for the speed.

6. A method according to one of the preceding claims, **characterized in that** a previously determined target position on the motion path of the robot is the reference value for the determined position.

7. A method according to one of the preceding claims, **characterized in that** the target position after a planned velocity function is determined according to a default parameter of a motion sequence in the robot control.

8. A method according to one of the preceding claims, **characterized in that** a time measurement is started at the time when the brake is actuated.

9. A method according to one of the preceding claims, **characterized in that** a monitoring function and/or a security function of an error checking apparatus is switched off at least during the test process.

10. A method according to one of the preceding claims, **characterized in that** a reliable maximum driving torque of the robot drive is limited at least during the test process to such a value which is smaller than the maximum value in normal operations.

11. A method for testing the brake functions of a robot with at least two robot drives with a method according to one of the preceding claims, **characterized in that** the method is performed in each robot drive.

12. A method according to claim 11, **characterized in that** the robot drives are tested in parallel or / and successively.

13. A method for evaluating brake functions with several tests of brake functions performed in determined intervals according to one of the preceding claims, with the test results being put in a temporal context with each other at the different times of the tests and with forecasts being made on a current and/or future braking state by means of trend analysis, especially extrapolation.

14. A method according to claim 13, **characterized in that** statements on a future maintenance time is made on the basis of trend analysis, especially by extrapolation.

## Revendications

1. Procédé pour tester une fonction de freinage d'un entraînement (10) pour un robot, lequel entraînement (10) est au moins temporairement couplé à un frein moteur mécanique qui agit sur l'entraînement en question pendant le contrôle, **caractérisé en ce que**
l'entraînement (10) du robot fonctionne avec une régulation de la position,
**en ce qu'**un frein est actionné pendant que l'entraînement du robot fonctionne (22),
**en ce qu'**après un intervalle de temps prédéterminé (28) après l'actionnement du frein, la vitesse de l'entraînement du robot est mesurée (30) et
**en ce que** la vitesse mesurée est comparée à une valeur de référence prédéterminée (32).

2. Procédé selon la revendication 1, **caractérisé en ce qu'**une position de l'entraînement du robot est constatée et **en ce que** la position constatée est comparée à une valeur de référence prédéterminée.

3. Procédé selon la revendication 2, **caractérisé en ce que** l'entraînement du robot est conduit à une vitesse de consigne constante.

4. Procédé selon la revendication 2 ou 3, **caractérisé en ce que** la vitesse choisie est inférieure à un dixième de la vitesse maximale de l'entraînement du robot.

5. Procédé selon l'une des revendications précédentes, **caractérisé en ce que** la valeur de référence fixée pour la vitesse est la valeur zéro.

6. Procédé selon l'une des revendications précédentes, **caractérisé en ce que** la valeur de référence pour la position déterminée est une position de destination préalablement déterminée sur la trajectoire de déplacement du robot.

7. Procédé selon l'une des revendications précédentes, **caractérisé en ce que** la position de destination est déterminée après une fonction planifiée de mesure de la vitesse selon une consigne d'une séquence de mouvement dans la commande du robot.

8. Procédé selon l'une des revendications précédentes, **caractérisé en ce qu'**une mesure du temps est lancée au moment où le frein est actionné.

9. Procédé selon l'une des revendications précédentes, **caractérisé en ce qu'**une fonction de surveillance et/ou une fonction de sécurité d'un dispositif de contrôle des erreurs est arrêtée au moins pendant l'opération de test.

10. Procédé selon l'une des revendications précédentes, **caractérisé en ce qu'**un couple d'entraînement maximal admissible de l'entraînement du robot est limité au moins pendant l'opération de test à une valeur inférieure à la valeur maximale en fonctionnement normal.

11. Procédé pour tester des fonctions de freinage d'un robot possédant au moins deux entraînements de robot avec un procédé selon l'une des revendications précédentes, **caractérisé en ce que** le procédé est mis en oeuvre sur chaque entraînement de robot.

12. Procédé selon la revendication 11, **caractérisé en ce que** les entraînements de robot sont testés en parallèle et/ou successivement.

13. Procédé pour l'analyse de fonctions de freinage avec un ou plusieurs tests de fonctions de freinage selon l'une des revendications précédentes exécutés à des intervalles de temps déterminés, les résultats des tests aux différents moments de test étant mis en relation entre eux dans le temps, et une analyse de tendance, en particulier par extrapolation, étant utilisée pour prédire un état actuel et/ou futur des freins.

14. Procédé selon la revendication 13, **caractérisé en ce que** sur la base de l'analyse de tendance, une prédiction d'un moment futur d'entretien est formulée, en particulier par extrapolation.
